# EUROPEAN PATENT SPECIFICATION

(11) **EP 4 230 097 B1**
(45) Date of publication and mention of the grant of the patent: **03.06.2026**
(21) Application number: 22157163.1
(22) Date of filing: 17.02.2022
(51) Int. Cl.: A47J 31/42, A47J 42/50, A47J 31/44

(54) **COFFEE MACHINE**
KAFFEEMASCHINE
MACHINE À CAFÉ

(43) Date of publication of application: 23.08.2023
(73) Proprietor: BSH Hausgeräte GmbH, 81739 München (DE)
(72) Inventor: Fujs, Slavko, 3320 Velenje (SI); Lemez, Samo, 3327 Smartno ob Paki (SI); Ogrizek, Bostjan, 3320 Velenje (SI); Semprimoznik, Ales, 3330 Mozirje (SI)

(56) References cited:
- EP-B1- 3 270 747
- WO-A1-2004/098361
- WO-A1-2021/080547
- DE-C- 245 461
- US-A1- 2017 112 325

## Description

The present invention relates to a coffee machine, especially to a full automatic, built-in coffee machine comprising a coffee beans container housing with a housing aperture and a removable coffee beans container having a coupling element, an aperture and an aperture cover for closing and opening the aperture. The container has a sharp cutting geometry of a zigzag shape for cutting and grinding the coffee beans which stuck between the container and the aperture cover and the cutting geometry is placed on a back side of the aperture of the container and the aperture cover is slidably mounted with the container. The coupling element has a positioning element and a slope and the container housing has a positioning shape and an opposite incline.

The fully automatic built-in type coffee machines are known form the state of the art. In this type of the coffee machines the front panel opens towards the user for the service purpose. After opening the front panel of the coffee machine the consumer gets the access to the internal modules of the device like coffee beans container, water tank or brewing unit modules. The coffee beans container is a drawer shape. To fill the container it has to be removed from the coffee machine. Upon insertion of the container the device is ready to brew a beverage. The presence and status of ground coffee drawer is often monitored by a micro switch.

The patent application WO 2004/ 098 361 A1 discloses a grinding machine for use in grinding materials, the grinding machine comprising: a grinder assembly for receiving material therein; at least one removable hopper attachable proximate to the grinding assembly for dispensing material to the grinder assembly; a passage defined in the hopper being cooperatively placed in communication with the grinding assembly for dispensing material from the hopper to the grinder assembly; a displaceable shutter being positionable in an open position when the hopper is placed on the grinder assembly and being positionable in a closed position when the hopper is removed from the grinder assembly; and a slide gate mechanism including a slide gate and a mover linked to the slide gate for controllably opening and closing passage of material from the hopper to the grinder assembly for grinded material therein.

The patent document US 2017/112325 A1 discloses a coffee bean container, in particular a double bean container, for releasably fixing on a coffee grinder or a coffee machine with an integrated coffee grinder, with a first bean compartment comprising a first bean outlet and with at least one second bean compartment comprising a second bean outlet, with closure means assigned to the bean outlets for closing the bean outlets, with locking means for locking the bean container to the coffee grinder or to the coffee machine, and with an actuating element actuatable by a user and moveable relative to the bean compartments, wherein the actuating element is designed and arranged for both opening all bean outlets and for locking the locking means, in particular with a single actuating movement, and/or both for closing all bean outlets and unlocking the locking means, in particular with a single actuating movement.

The patent document EP 3 270 747 B1 discloses a fully automatic coffee machine with a grinding device for grinding coffee beans comprising a device for portioning coffee beans wherein the coffee beans can be supplied to the device from at least one coffee bean supply container, wherein the fully automatic coffee machine comprises a rotatably borne shaft which is in direct or indirect effective connection with an actuator, wherein the shaft is connected in a rotationally fixed manner to a rotating grinding element of the grinding device and is in direct or indirect effective connection with the device so that the rotatable grinding element of the grinding device for grinding the coffee beans and the device can be jointly actuated by the shaft, wherein the device comprises at least one portioning disc arranged facing a coffee bean supply container and at least one base disc arranged between the portioning disc and the grinding device, wherein the portioning disc has at least one coffee portioning bore for receiving at least one coffee bean from the at least one coffee bean supply container and wherein the base disc has at least one outlet opening for emptying the coffee portioning bore and wherein the shaft is connected in a rotationally fixed manner to the portioning disc or the base disc of the device.

The patent document WO 2004/098361 A1 discloses a grinding unit for selectively grinding beans, in particular coffee beans comprising a plurality of storage containers for storing the beans and a grinding module associated to the storage containers for grinding the beans. The grinding unit comprises a plurality of shutters, wherein each of the shutters is associated to one of the storage containers for feeding the beans from a selected storage container to the grinding module, wherein the shutters are movable with respect to each other to selectively feed the beans from the selected container to the grinding module. An actuation unit is associated to the shutters for actuating the shutters and for opening and closing the storage containers independently. The grinding unit comprises a control unit for controlling the actuation unit in order to open and close the selected storage container and for controlling the grinding module, wherein the control unit is adapted to start driving the grinding module after opening the selected container and to drive the grinding module for a predetermined time period or for a predetermined number of rotations after closing the selected storage container. The control unit is configured to determine said predetermined time period or said predetermined number of rotations, respectively, based on an opening time during which the selected storage container has been open.

The patent document WO 2021/080547 A1 discloses a dosing means for dosing the materials to be used, especially coffee beans. The inventive dosing means is characterized by the internal body comprising at least one recess located on at least one part of the opening, and which extends from the opening towards the area opposite to the opening.

The patent document DE 245 461 C discloses a mixing mill with a divided grinding material container, in which a pivotable flap is provided to achieve different mixtures, characterized in that the flap is provided at the edge with teeth or a cutting edge which, on closing, causes the material which has become trapped between the flap and the container wall to be comminuted.

The patent application WO 2010/ 085 850 A1 An espresso machine has a built-in coffee grinder. An electrical switch toggles between a one cup dose and a two cup dose, The switch works in conjunction with a dose strength adjustment. Alteration of the dose strength adjustment alters the dose strength for both the one cup of two cup dose settings. The internal coffee grinder dispenses into a portafilter that is held in a hand free support cradle. In some embodiments, the upper burr head of the grinder is retained by a bracket. The combination of upper burr head and bracket allows the upper burr head to removed and replaced without having to re-set the grind size.

The patent document EP 2 878 240 B1 discloses a fully automatic coffee machine for household purposes, having a housing and a storage container removable therefrom for coffee beans, which can be moved on an actuating path, having a grinder for coffee beans, having a discharge opening of the storage container for the supply of the beans to the grinder and having a closure device for closing the discharge opening with a door, which when the storage container is moved can be adjusted between an open position to release the discharge opening and a closed position to close the discharge opening, wherein the door can be moved by manual movement of the storage container without pretensioning between the open position and the closed position, having a stop on the housing of the fully automatic coffee machine, which stands transversely to the actuating path and, when a storage container is inserted, is in touching contact with the door and can be moved from a locking position out of the actuating path into a release position, wherein a pivotable latching lug as a stop which, when a storage container is inserted, engages in a locking manner in the direction of the actuating path of the door on an edge of the door or a pivotable rib surface as a stop, the ribs of which run transversely to the actuating path and into which, when a storage container is inserted, a rib on the door engages.

Presented solutions do not provide a coffee machine in which the possibility of malfunction of the device was limited.

It is the object of the present invention to provide a further development with and advantage of the state of the art.

A further object of the invention is to provide a coffee machine smooth operation.

### SUMMARY OF THE CLAIMED INVENTION

This object is solved by a coffee machine whereby the coupling element has a positioning element and a slope and the container housing has a positioning shape and an opposite incline. The invention claims a coffee machine according to claim 1. A further preferred embodiment is claimed in claim 2.

### SUMMARY OF THE DISCLOSURE

In the present disclosure, the coffee machine is a full automatic, built-in type coffee machine having a coffee beans container housing with a housing aperture and a removable coffee beans container having an aperture and an aperture cover for closing and opening the aperture. The coffee machine is provided also with a coupling element which connects the container with a coffee grinder.

The coffee beans container is a drawer type receptacle for storing coffee beans. The container is removably mounted into the container housing and can be inserted into the coffee machine housing or can be removed in order to be filled with coffee beans. For this reason the front panel of the coffee machine opens and the user have the free access to the container. The container housing is a part of the coffee machine body. The housing has a housing aperture. The housing aperture is a simple opening placed on the bottom side of the housing. The bottom wall of the container has an aperture. The aperture size and placement corresponds with the size and position of the housing aperture in order to let the coffee beans to enter the coffee grinder which is placed under the coffee beans container. The aperture of the container has an aperture cover. The aperture cover is slidably mounted with the container which allows to cover the aperture when the container is demounted from the housing. The positive effect is that the coffee beans do not fall outside the container. When the container is full of coffee beans the aperture cover is responsible for cover the aperture. During inserting of the container into the housing the aperture cover gradually uncovers the aperture so the coffee beans can get to the coffee grinder and the brewing process can be carried out. The container and the coffee grinder are connected by a coupling element. The coupling element is a component which is responsible for connecting the container and the grinder and also the geometry of the coupling element helps to align the mutual position of the aperture, the housing aperture and the coffee grinder. The positive effect is that the residues do not collect in the container housing so there is no necessity to clean the container housing which is very uncomfortable for the user. The coupling element has a positioning element and a slope. The container housing has a positioning shape and an opposite incline. The slope of the coupling element corresponds with the opposite incline of the container housing. The positioning shape of the container housing corresponds with the positioning element of the coupling element. The positioning element is a part of the coupling element and it is simple protrusion which shape matches the profile of the positioning shape which is an element of the housing. The positioning shape is a simple protrusion which fits the shape of the positioning element. The slope shape fits the opposite incline of the container housing. Thanks to such arrangements the accurate and precise fit of all elements of the device has been provided. The connection of the positioning element with the slope, the positioning shape with the opposite incline provides better alignment between the aperture cover, the container, the housing and the coffee grinder. The positive effect is that no grounded coffee or coffee residuals collects outside the coffee beans container e.g. in the coffee beans container housing. Therefore there is no necessity of additional cleaning of the device which is important for the user satisfaction.

In the preferred embodiment the aperture cover has an inclined shape.

The aperture cover is placed under the container. To strengthen the cutting force the inclined shape of the aperture cover is provided. The inclined shape is placed at the bottom side of the aperture cover. The inclined shape and the cutting geometry of the container form a shape which strengthen the cutting efficiency.

The present invention enables a coffee machine in which the probability of malfunction of the device has been limited by introduction of the cutting geometry on the edge of the aperture of the container. The geometry of the coupling element and the container housing provides the exact mutual positioning of the elements and provides a tight connection which prevents the leakage of the coffee residuals.

The construction of the invention, however, together with additional objects and corresponding advantages will be best understood from the following description of specific embodiments and in connection with the accompanying drawing.

In the drawing:
- Fig. 1: shows a coffee machine with a coffee beans container in isometric view
- Fig. 2: shows a part of a container housing with an aperture cover and a coupling element in isometric view
- Fig. 3: shows a part of the container with a cutting geometry in isometric view
- Fig. 4: shows a container with a coupling element cross section
- Fig. 5: is an enlarged part of the Fig. 4 and shows the details of the coupling element in cross section.

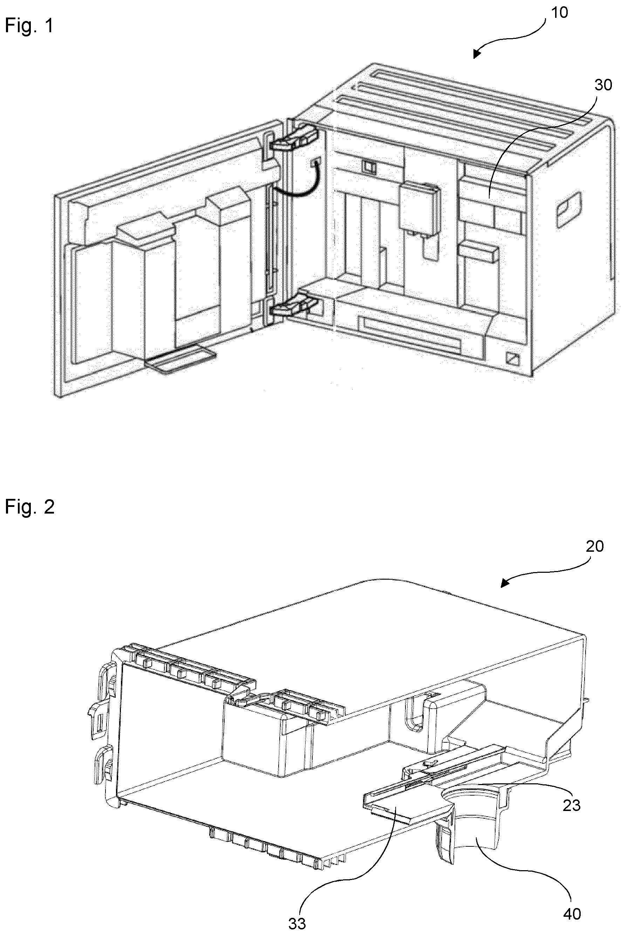

Fig. 1 shows a built-in type coffee machine 10. The coffee machine 10 is provided with a container 30 for storage the coffee beans. The container 30 is a drawer type receptacle as the device is built-in the furniture. The main panel of the coffee machine 10 opens and the container 30 can be taken from the device in order to fill it with the coffee beans or in order to be cleaned.

Fig. 2 shows a container housing 20 with an aperture cover 33 and a coupling element 40 in isometric view. The container housing 20 is a part of the coffee machine 10 (not shown on the figure). The container housing 20 is provided to receive the coffee beans container 30 (also not shown on the figure). The aperture cover 33 is slidably mounted with the container (not shown no the figure) and it is shown in a position in which the container 30 with the aperture cover 33 is mounted in the container housing 20. In such position the aperture cover 33 the aperture 32 of the container 30 is opened and the coffee beans can fall from the container 30 to the grinder which is placed under the coupling element 40. The container housing 20 has a housing aperture 23 which corresponds with the shape of the aperture cover 33 and the coupling element 40.

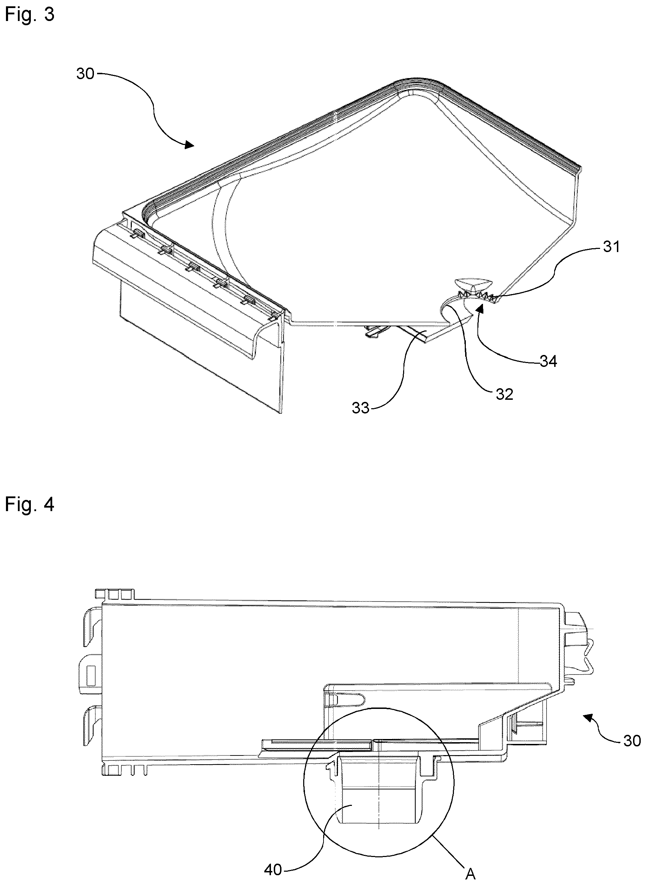

Fig. 3 shows a part of the container 30 with a cutting geometry 31 in isometric view. The container 30 has an aperture 32. The aperture cover 33 is slidably mounted with the container 30 and covers the aperture 32 when the container 30 is outside the coffee machine 10. A back side 34 of the aperture 32 is provided with the cutting geometry 31. The cutting geometry 31 is placed on an edge of the aperture 32 and the cutting geometry 31 has a zigzag shape for strengthen the cutting force. The figure shows the aperture cover 33 in a position during inserting or removing the container 30 when the aperture 32 is partially cover by the aperture cover 33.

Fig. 4 shows a cross section of a container 30 and a coupling element 40. The coupling element 40 is provided to join the coffee beans container 30 with a coffee grinder (not shown on the figure) which is placed under the coupling element 40.

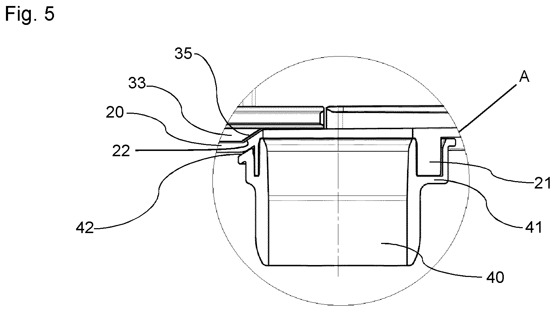

Fig. 5 is an enlarged part of the Fig. 4 and shows the details of the coupling element 40 in cross section. The coupling element 40 has a positioning element 41 and a slope 42. The aperture cover 33 has an inclined shape 35.

The container housing 20 has a positioning shape 21 and an opposite incline 22.

The positioning shape 21 corresponds with the positioning element 41. The slope 42 corresponds with the opposite incline 22. The shapes of the corresponding elements are designed in such a way to fit each to another and makes a tight connection between each of them.

The present invention enables a coffee machine in which the probability of malfunction of the device has been limited by introduction of the cutting geometry on the edge of the aperture of the container. The geometry of the coupling element and the container housing provides the exact mutual positioning of the elements and provides a tight connection which prevents the leakage of the coffee residuals.

### REFERENCE SIGNS

- 10: coffee machine

- 20: container housing
- 21: positioning shape
- 22: opposite incline
- 23: housing aperture

- 30: container
- 31: cutting geometry
- 32: aperture
- 33: aperture cover
- 34: back side
- 35: inclined shape

- 40: coupling element
- 41: positioning element
- 42: slope

## Claims

1. A coffee machine (10) comprising:
a coffee beans container housing (20) with a housing aperture (23) and
a removable coffee beans container (30) having an aperture (32) and an aperture cover (33) for closing and opening the aperture (32) and
a coupling element (40), the container (30) has a sharp cutting geometry (31) of a zigzag shape for cutting and grinding the coffee beans which stuck between the container (30) and the aperture cover (33) and the cutting geometry (31) is placed on a back side (34) of the aperture (32) of the container (30) and the aperture cover is slidably mounted with the container (30), wherein the coupling element (40) has a positioning element (41) and a slope (42) and the container housing (20) has a positioning shape (21) and an opposite incline (22), **characterized in that** the slope (42) of the coupling element (40) corresponds with the opposite incline (22) of the container housing (20) and the positioning shape (21) of the container housing (20) corresponds with the positioning element (41) of the coupling element (40).

2. The coffee machine (10) according to any of the preceding claims, **characterized in that** the aperture cover (33) has an inclined shape (35).

## Patentansprüche

1. Kaffeemaschine (10), die Folgendes umfasst:
ein Gehäuse (20) für einen Kaffeebohnenbehälter mit einer Gehäuseöffnung (23) und einen herausnehmbaren Kaffeebohnenbehälter (30) mit einer Öffnung (32) und einer Öffnungsabdeckung (33) zum Schließen und Öffnen der Öffnung (32) und
ein Koppelelement (40), wobei der Behälter (30) eine scharfe Schneidgeometrie (31) in Zickzackform zum Schneiden und Mahlen der Kaffeebohnen aufweist, die zwischen dem Behälter (30) und der Öffnungsabdeckung (33) steckenbleiben, und die Schneidgeometrie (31) an einer Rückseite (34) der Öffnung (32) des Behälters (30) angeordnet und die Öffnungsabdeckung verschiebbar an dem Behälter (30) befestigt ist, wobei das Koppelelement (40) ein Positionierelement (41) und eine Schräge (42) und das Behältergehäuse (20) eine Positionierform (21) und eine Gegenschräge (22) aufweist, **dadurch gekennzeichnet, dass** die Schräge (42) des Koppelelements (40) der Gegenschräge (22) des Behältergehäuses (20) und die Positionierform (21) des Behältergehäuses (20) dem Positionierelement (41) des Koppelelements (40) entspricht.

2. Kaffeemaschine (10) nach einem der vorhergehenden Ansprüche, **dadurch gekennzeichnet, dass** die Öffnungsabdeckung (33) eine schräge Form (35) aufweist

## Revendications

1. Machine à café (10) comprenant :
un boîtier de récipient à grains de café (20) avec une ouverture de boîtier (23) et un récipient à grains de café amovible (30) présentant une ouverture (32) et un couvercle d'ouverture (33) pour fermer et ouvrir l'ouverture (32) et
un élément de couplage (40),dans laquelle le récipient (30) présente une géométrie de coupe tranchante (31) en forme de zigzag pour couper et moudre les grains de café coincés entre le récipient (30) et le couvercle d'ouverture (33), et la géométrie de coupe (31) est disposée sur une face arrière (34) de l'ouverture (32) du récipient (30), et le couvercle d'ouverture est monté de manière coulissante sur le récipient (30), dans lequel l'élément de couplage (40) présente un élément de positionnement (41) et une pente (42), et le boîtier du récipient (20) présente une forme de positionnement (21) et une inclinaison opposée (22), **caractérisée en ce que** la pente (42) de l'élément de couplage (40) correspond à l'inclinaison opposée (22) du boîtier du récipient (20) et que la forme de positionnement (21) du boîtier du récipient (20) correspond à l'élément de positionnement (41) de l'élément de couplage (40).

2. Machine à café (10) selon l'une des revendications précédentes, **caractérisée en ce que** le couvercle d'ouverture présente une forme inclinée (35).
